# EUROPEAN PATENT APPLICATION

(11) **EP 4 813 905 A1**
(43) Date of publication of application: **30.09.2026**
(21) Application number: 26167352.9
(22) Date of filing: 24.03.2026
(51) Int. Cl.: B66F 9/075, B60L 3/12, B60L 58/12, B66F 9/24, G07C 5/08

(54) **INDUSTRIAL TRUCK EQUIPPED WITH A FUNCTION FOR GENERATING A REPORT ON ENERGY CONSUMPTION**

(30) Priority: 28.03.2025 IT 202500006534
(71) Applicant: Toyota Material Handling Manufacturing Italy S.p.A, 40132 Bologna (IT)
(72) Inventor: Foligno, Andrea, Bologna (IT); Iozzi, Daniele, 40132 Bologna (IT); Pappi, Nicola, 40132 Bologna (IT)
(74) Representative: Hoffmann Eitle

(57) **Abstract**

An industrial truck(10) comprises: control means (20), an electrical energy-storage system (71), and operating means (e.g. the material handling means 70 and/or the traction means 72) supplied with power through the energy-storage system. The control means are configured to acquire data related to energy consumption by the operating means in one work cycle and to generate, based on the acquired data, a report related to energy consumption in a work cycle.

## Description

### Field of the disclosure

The present disclosure relates to an industrial truck equipped with a function for generating a report on energy consumption.

### Technical background

It is well known in the art to make industrial trucks intended for use in an industrial site, a warehouse, ports, or the like. Forklift trucks are an example of industrial trucks, which typically include a frame, a mast rotatably mounted on the frame, and a fork slidingly mounted on the mast. The fork is used to lift a load, for example to transport goods in a warehouse.

In recent years, electrically powered industrial trucks, which use lithium-ion, lead-acid or other battery systems, have also become widespread.

It is also common to equip the forklift truck with one or more displays to display control information related to the operation of the truck. The display can typically show various types of information, including, for example, the speed of the truck, information related to the position of the fork, and also information related to instantaneous energy consumption, especially in the case of industrial truck of the type powered by electric battery. Conventionally, the maximum information available regarding consumption is the instantaneous energy supplied.

### Summary of the disclosure

Known forklift trucks are not configured to provide the user with much information about machine's energy consumption. In addition to this, there is a complete lack of qualitative information for drivers on consumption related to their driving style, which can obviously be more or less energy consuming. As a result, drivers are unable to assess the effect of their driving style on the machine's energy consumption. Overall, these factors lead to suboptimal energy use by the drivers and increased costs for truck operations.

In some applications, the industrial truck can be further configured so as to be able to set different performance profiles; the different performance profiles can configure different constraints on the operations and functionalities of the industrial truck for one or more working cycles. For example, the maximum permissible energy consumption, as well as other operating parameters, may vary depending on the performance profile in use. However, in this case, the users of the industrial truck are unable to easily recognize the relationship between their own driving style during a work cycle and the operating limits set on the machine, which can also vary considerably depending on the profile set. This leads to inefficient energy use by drivers, who are unable to assess the impact of their driving style on energy consumption.

It is an object of the present disclosure to provide an electrically powered industrial truck which is able to solve one or more of the problems described above. In particular, an object of the disclosure is to make an industrial truck that is configured to effectively provide the driver with information about the operating status of the industrial truck, in particular about energy consumption. A further object is to provide an industrial truck that allows energy consumption to become more effective, thus reducing machine's operating costs.

In view of the above, the present disclosure proposes an industrial truck comprising:
- control means,
- an electrical energy storage system,
- operating means powered by the electrical energy storage system,
characterized in that the control means are configured to acquire data related to energy consumption by the operating means in one work cycle and to generate, based on the acquired data related to energy consumption, a report related to energy consumption in a work cycle.

Preferably, the work cycle is associated with a time range between a switch-on timing (Ti) of the industrial truck and a timing of a subsequent switch-off (Te) of the industrial truck.

Preferably, the control means are configured to acquire the data related to energy consumption by the operating means in a work cycle by discarding the time periods (I1, I2) in which the energy consumption of the operating means is substantially equal to zero.

Preferably, the data related to energy consumption that is acquired by the control means includes the instantaneous power consumed by the operating means at the points in time of a work cycle in which the consumption of energy by the operating means is not null.

Preferably, the control means are configured to calculate an average power (Pm) with respect to the points in time in a work cycle in which the consumption of energy by the operating means is not null, wherein said report generated by the control means refers to the calculated average power.

Preferably, the control means are configured to calculate, based on the acquired data related to energy consumption, a percentage of time in which power consumption of the operating means was within a first power range and a percentage of time in which power consumption of the operating means was within a second power range, preferably also a percentage of time in which power consumption of the operating means was within a third power range, wherein the first, the second and the third, if present, power ranges are adjacent and not overlapping, wherein the report related to energy consumption in one work cycle refers to the calculated percentages.

Preferably, the control means are configured to calculate, based on the acquired data related to energy consumption, a time span in which power consumption of the operating means was within a first power range and a time span in which power consumption of the operating means was within a second power range, preferably also a time span in which power consumption of the operating means was within a third power range, wherein the first, the second and the third, if present, power ranges are adjacent and not overlapping, wherein the report related to energy consumption in one work cycle refers to the calculated time spans.

Preferably, the report related to energy consumption in a work cycle includes the percentage of time in which energy consumption of the operating means was null with respect to the time period of a work cycle, or the percentage of time wherein energy consumption of the operating means was not null with respect to the time period of a work cycle.

Preferably, the control means are configured to generate a plurality of reports, each of which being related to one of a plurality of work cycles carried out in a day.

Preferably, the report that is generated by the control means refers to the total energy consumed in a work cycle.

Preferably, the energy consumed in a work cycle is classified using two or more classification categories each associated with an energy range per work cycle, wherein the range limits depend on a set-up profile of the industrial truck associated with the performance, wherein the generated report refers to the classification of the consumed energy in a work cycle.

Preferably, the energy consumption data that are acquired by the control means include a curve of the instantaneous power that is supplied by the energy storage system during a work cycle.

Preferably, the industrial truck further comprises a display, wherein the control means are configured to control the display so as to display the generated report.

Preferably, the operating means include at least one traction system of the industrial truck and one material handling system.

The present disclosure provides a database the driver can consult with regard to energy consumption, a system that analyzes consumption and a display capable of providing relevant aggregate data about the operation of the machine, such as energy consumption data. Thanks to the present disclosure, drivers can check how much energy they consumed on average during the previous trip (or work cycle) or in previous days; this data is extremely useful for planning their trips, scheduling recharging or breaks, and even for adapting their driving style. This allows the industrial truck to be used more efficiently and downtime and energy consumption to be reduced.

### Brief description of the drawings

The present disclosure will be illustrated with reference to exemplary embodiments described with reference to the accompanying drawings.

In the drawings:
- Figure 1 shows an industrial truck according to the present disclosure;
- Figure 2 schematically shows the main components of the industrial truck shown in Figure 1;
- Figures 3-4 show graphs of energy consumption during a work cycle;
- Figures 5-7 show views of a report on energy consumption according to embodiments of the present disclosure;
- Figure 8 shows a sequence of steps that can be implemented by the control means of the industrial truck according to an embodiment;
- Figure 9 shows a possible implementation of the control unit of the industrial truck.

### Detailed description

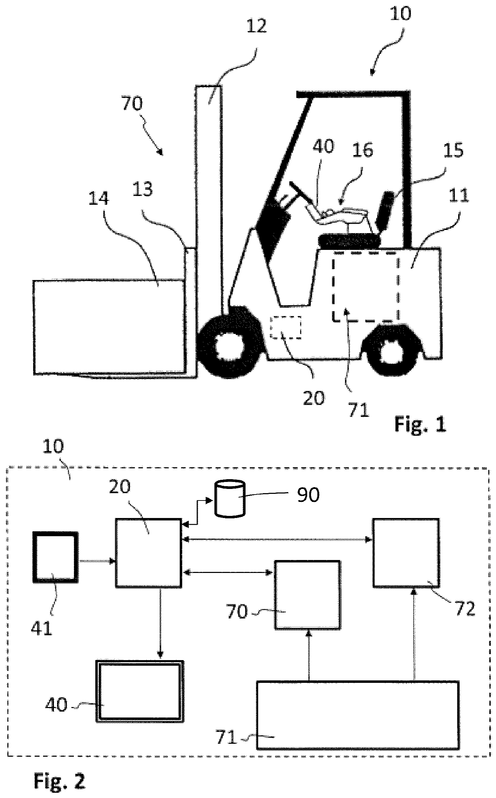

Figure 1 shows an industrial truck 10 according to an embodiment of the present invention, for example a forklift truck. It is understood that the present disclosure is not limited to a forklift truck, but also includes other industrial trucks intended for use in industrial sites, ports, logistics centers, warehouses or the like.

Preferably, the industrial truck includes operating means that include, for example, traction means and/or material handling means. The industrial truck 10 can be used to handle material, as it is equipped with material handling means 70 of the type shown in Figure 1. In the example shown in the figure, the industrial truck 10 includes a frame 11 and material handling means 70 which include a mast 12 rotatably mounted on the frame 11, and a lifting element 13 (for example a fork) to lift a load 14; the lifting element 13 is mounted on the mast 12 so as to slide along the mast 12; in Figure 1, the lifting element 13 is shown in a lowered position. It is understood that the material handling means may also be implemented in other ways according to known art. For example, the lifting fork could be replaced with a different handling device, such as a clamp, a ram or the like.

The industrial truck 10 preferably comprises a user station, for example in the form of a user seat 15. The station can be made in a driver's cabin. The seat 15 can be accommodated in the cabin. The seat may advantageously include an armrest 16 on a seat side. In a preferred embodiment, a display 40 of the industrial truck 10 may be mounted on the armrest 16, for example at an end thereof. However, other configurations are also possible; the present disclosure also covers mounting the display 40 on the industrial truck 10 at other positions, for example on the dashboard or even other positions visible to the operator in the driver's station.

The industrial truck 10 can preferably be electrically powered by means of an electrical energy storage system 71 shown in dotted lines in Figure 1. The electrical energy storage system 71 can be housed, for example, inside the frame 11, either in a removable or integrated and non-removable manner. For example, the electrical energy storage system 71 may be arranged at least partially below the driver's station. The electrical energy storage system 71 may include any battery system, for example one or more battery packs, which may be of lithium-ion or even lead-acid, nickel-metal hydride, or any other known type. Alternatively, the industrial truck could also include an internal combustion engine, or it could include a hybrid drive system, thus equipped with one or more electric and internal combustion engines.

The Industrial truck 10 may include four wheels or three wheels arranged on a front axle and a rear axle. The industrial truck may include a steering wheel for steering the truck while driving, for example, to steer the front wheels or the rear wheels of the truck. However, other multi-axle configurations are also included in the present disclosure. Similarly, other means of issuing driving commands to the industrial truck may also be used in addition to or in place of the steering wheel, for example a joystick or the like.

The industrial truck 10 includes traction means 72 (shown schematically in Figure 2) intended to enable the truck itself to move. The traction means 72 preferably include one or more electric motors, for example one electric motor for each axle of the industrial truck. Preferably, the traction means 72 are powered by the energy storage system 71, as schematically shown in Figure 2. Preferably, also the material handling means 70 are powered by the energy storage system 71 (Figure 2). According to known art, the material handling means 70 may include a hydraulic pump that feeds hydraulic drives intended to move the movable parts of the material handling means.

The industrial truck 10 further includes a control unit 20 (shown schematically by dotted lines in Figure 1 and by solid lines in the diagram in Figure 2) configured to control the operating means, which, in the example of Figure 2, comprise the material handling means 70 and/or the traction means 72. In the present disclosure, the control unit 20 may be referred to as "controller 20" or "control means 20", which should be understood as synonymous in the description. Preferably, the control unit 20 is configured to control the material handling means 70 and/or the traction means 72 based on commands issued by a user of the machine via a user interface. The user interface (denoted schematically by the reference numeral 41 in Figure 2) may include a steering wheel, a touchscreen, a keypad, a joystick, one or more pedals, or other command input interfaces or a combination thereof. The control unit 20 may be implemented in any known manner, for example, by means of a processing device, an electronic board, or one or more processing devices. The control unit according to the present disclosure is not limited to any type of hardware and/or software implementation, and may be implemented by a distributed architecture or a single device. As shown in Figure 2, the control unit 20 is connected to the display 40 and is configured to control the display 40 and its operating modes. In an embodiment, the display 40 could be implemented by a touchscreen. In this case, the display 40 could also be part of the input interface of the industrial truck and could be configured to receive input from the truck user via a tactile input.

The control means 20 are configured to acquire data related to energy consumption by the operating means in a work cycle. The data related to energy consumption that is acquired by the control means 20 may include, for example, the instantaneous power consumed by the operating means 70, 72 at the points in time of a work cycle in which the consumption of energy by the operating means is not null. The work cycle is associated with a time range between a switch-on timing Ti of the industrial truck and a timing of a subsequent switch-off Te of the industrial truck. The work cycle can be defined as the work performed by the industrial truck between a switch-on timing Ti of the industrial truck and a timing of a subsequent switch-off Te of the industrial truck. Data related to energy consumption by the operating means during a work cycle can be acquired by means of opposing measurement sensors (not shown) that measure the power absorbed by the operating means and/or the power output from the energy storage system 71. The acquisition of data related to energy consumption by the operating means in a work cycle can also take place based on control signals sent by the control means to the operating means 70, 72. The control means 20 are configured to store in a database 90 the acquired data related to energy consumption by the operating means in a work cycle.

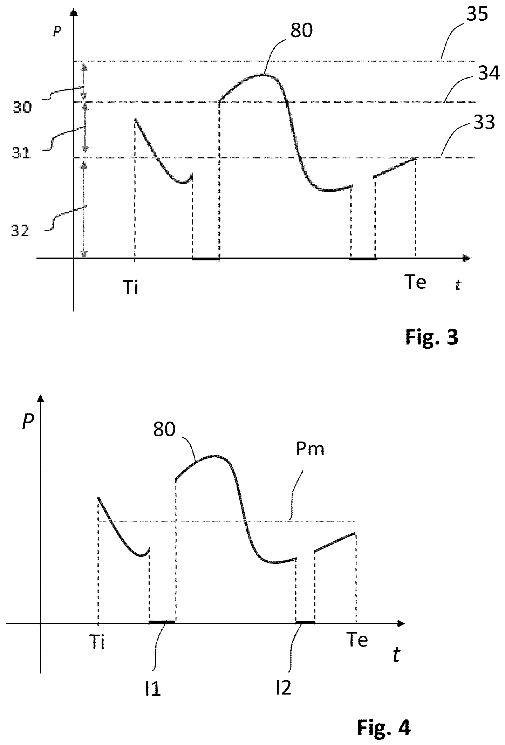

In an exemplary embodiment, data related to energy consumption by the operating means in a work cycle includes a curve 80 of energy (or power) consumption as a function of time, as depicted in Figure 3 or 4. The control means 20 can be configured to store one or more consumption curves 80 related to one or more work cycles, respectively. Each consumption curve 80 can advantageously refer to a work cycle. The example in Figures 3 and 4 show a work cycle between the switch-on timing Ti and the switch-off timing Te of the industrial truck. Alternatively, the processing means may store processed consumption curves 80, for example in the form of an aggregate piece of data configured to generate a report. The result of processing the consumption curves 80 can be, for example, a report on energy consumption in a work cycle, as described below. The control means 20 are, indeed, configured to generate, based on acquired energy consumption data (for example, a consumption curve 80), a report related to energy consumption in a work cycle. Advantageously, the control means 20 can generate a report per work cycle. Advantageously, the control means 20 can store each report generated per work cycle in the database 90. A report can refer to one work cycle or even several work cycles. For example, in the latter case, a report may relate to all work cycles in a day, or in a predetermined period of time (e.g., a month, a week, or the like).

In a preferred embodiment, the data related to energy consumption that is acquired by the control means 20 may include the instantaneous power consumed by the operating means 70, 72 at the points in time of a work cycle in which the consumption of energy by the operating means is not null. For example, with reference to Figure 4, the control means 20 may filter (and thus ignore) power consumption in the time periods I1 and I2 within a work cycle, where power consumption was null. The control means 20 are therefore configured to generate the consumption report by taking into account the parts of the work cycle from Ti to Te, while excluding the time periods with zero consumption I1 and I2. In other words, the control means acquire the data related to energy consumption by the operating means in a work cycle by discarding the time periods I1, I2 in which the energy consumption of the operating means is substantially equal to zero. This way, the average power consumption in a work cycle can be calculated in a meaningful way, since the operation breaks in a work cycle are filtered out in the calculation of the report. For example, if a driver has a very energy-consuming driving style but takes long breaks, without filtering out the breaks during the work cycle, the report could be inaccurate and indicate low power consumption, failing to account for the driver's energy-intensive style.

With reference to Figure 4, the control means 20 can be configured to calculate an average power Pm with respect to the points in time in a work cycle in which the energy consumption by the operating means is not null. In this case, the report generated by the control means may refer to the calculated average power. Alternatively, the control means 20 are configured to calculate the total energy consumed in a work cycle based on the consumption curve 80.

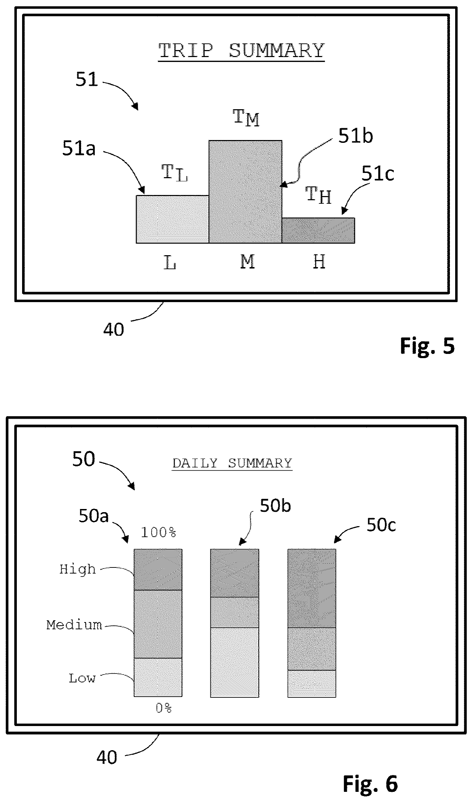

As shown in Figure 3, power thresholds 33, 34, and 35, which define adjacent power ranges 30, 31, and 32, are set in a preferred embodiment. The three power ranges can be identified as "low", "medium" and "high". A different number of ranges could also be defined, for example 2, 4, or 5 ranges or periods. Preferably, the control means 20 are configured to calculate, based on the acquired data related to energy consumption, a percentage of time in which power consumption of the operating means was within the first power range 30 and a percentage of time in which power consumption of the operating means was within the second power range 31, preferably also a percentage of time in which power consumption of the operating means was within the third power range 32. The first, second, and, if present, third power ranges 30, 31, 32 are adjacent and not overlapping. The time percentages can be conveniently calculated by dividing the time spent in a certain power range by the total time of a work cycle where the power was not null. The report 50 related to energy consumption in a work cycle refers to the percentages calculated, as shown in Figure 6. Figure 6 shows a daily report, "DAILY SUMMARY", which includes a plurality of sub-reports 50a, 50b, and 50c, each related to a work cycle carried out in a day. The report 50 could also relate to a single work cycle, or even to a larger number of work cycles. Each sub-report 50a, 50b, and 50c includes three percentages of time related to the time spent with consumption in the low, medium or high range. A representation of the reports 50a, 50b, and 50c includes a column with three different segments each having a length corresponding to the percentage of time associated with a power range. For example, each segment can have a graphical characteristic different from the other segments. In an example, a color code is associated with each segment. Preferably, the segment associated with the percentage of time spent with power consumption in the high range is red, the segment associated with the medium range is yellow, and the segment associated with the low range is green. The different colors are represented by different shades of gray in Figure 6. Advantageously, the report 50 is displayed on a display 40 of the industrial truck. This way, the user of the industrial truck can be provided with aggregate consumption information, which can be usefully employed to detect the machine's state of use and evaluate adjustments to driving style or performance profiles to be used for future work cycles. Consumption information can also be used to properly schedule subsequent work cycles and breaks during a working day, i.e., between one recharging cycle and the next recharging. Advantageously, the control means 20 are configured to control the display 40 so as to display a representation of the report 50 generated on the basis of the acquired consumption data.

In an alternative embodiment, with reference to Figure 3 and Figure 5, the control means 20 are configured to calculate, based on the acquired data related to energy consumption, a time span T_{L} in which power consumption of the operating means 70, 72 was within a first power range 32 and a time span T_{M} in which power consumption of the operating means 70, 72 was within a second power range 31, preferably also a time span T_{H} in which power consumption of the operating means 70, 72 was within a third power range 30. Again, the first, second, and, if present, third power ranges are adjacent and not overlapping. In this case, the report generated by the control means 20 related to energy consumption in a work cycle refers to the calculated time spans, i.e., it includes the times T_{M}, T_{H}, and T_{L}. Figure 5 shows a representation of the report 51, with three adjacent columns 51a, 51b, 51c whose length is determined by the times T_{M}, T_{H}, T_{L}. The report 51, "TRIP SUMMARY", refers to a work cycle. The report 51 is advantageously displayed on the display 40 of the industrial truck under the control of the control means 20. The report 51 can be displayed automatically at the end of a work cycle, for example when the industrial truck is switched off. In the case of the report 51, the different columns 51a, 51b, and 51c associated with the ranges "high", "medium" and "high" may have different graphical characteristics, such as a different color code, represented in Figure 5 with different gray scales.

In a preferred embodiment, the report related to energy consumption in a work cycle includes the percentage of time in which energy consumption of the operating means 70, 72 was null with respect to the time period of a work cycle, or the percentage of time wherein energy consumption of the operating means was not null with respect to the time period of a work cycle. This way, it is possible to assess the impact of breaks during the work cycle and allow adjustments to increase the efficiency of the industrial truck use in a work cycle.

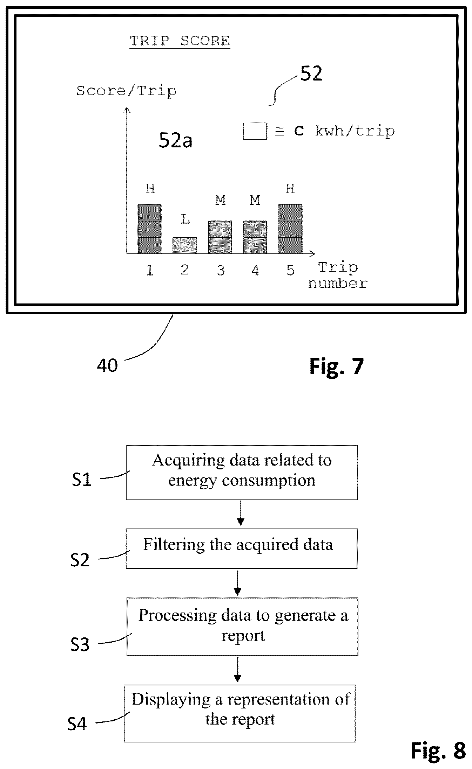

Preferably, the control means 20 are configured to generate a plurality of reports, each of which being related to one of a plurality of work cycles carried out in a day. Figure 7 shows a representation of a plurality 52 of reports 52a, wherein each of the reports 52a refers to a work cycle. In the case of Figure 7, the report 52a generated by the control means for a work cycle refers to the total energy consumed in the work cycle. In this embodiment, according to a possible option, the energy consumed in a work cycle is classified using two or more classification categories, each associated with an energy range per work cycle. In the example shown in Figure 7, three rectangles are associated with a high classification ("H") of energy consumption in a cycle, two rectangles are associated with a medium classification ("M") of energy consumption in a cycle, and one rectangle is associated with a low classification ("L") of energy consumption in a cycle. The horizontal axis in Figure 7 shows several cycles with progressively increasing numbers.

Preferably, the limits of the energy ranges per work cycle depend on a setting profile of the industrial truck associated with the performance, and the report 52a generated refers to the classification of energy consumed in a work cycle, for example cycle 1, cycle 2, cycle 3, cycle 4, or cycle 5, as shown in the example in Figure 7 (obviously, the number of cycles shown may vary depending on the activity of the industrial truck).

In an embodiment, the control means 20 are configured to set different operating limits of performance for the industrial truck based on a performance profile selected from a plurality of different performance profiles. For example, the performance profile can be entered by the user via the interface 41. Different operating limits can be associated with each performance profile, such as maximum translation and/or lifting speed, maximum translation and/or lifting acceleration.

Figure 8 shows the steps S1-S4 performed by the control means according to an embodiment.

In step S1, during a work cycle, the control means acquire data related to energy consumption, for example in the form of a power curve related to one or more work cycles. Optionally, the data can be stored in a database, or processed in real time.

In step S2, the acquired data can be filtered out according to an embodiment, for example by discarding moments of zero consumption in a work cycle.

In step S3, the acquired and filtered out data can be processed to generate data in an aggregate form, for example, data corresponding to a report on energy consumption during one or more work cycles. The data processed for generating the report can be conveniently saved in the database 90 for later retrieval.

In step S3, the control means can control the display 40 to show a representation of the report related to energy consumption, using the data processed in the previous step.

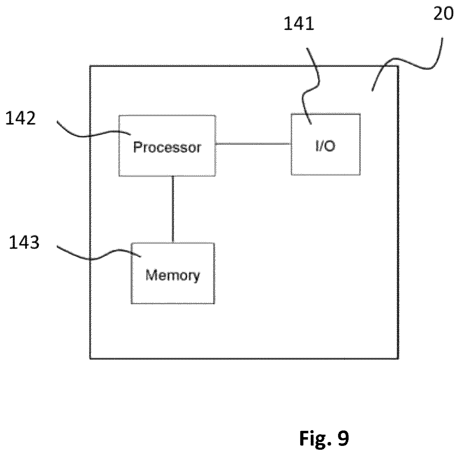

Fig. 9 shows a possible implementation of the control unit 20. In an embodiment, the control unit 20 includes a processor 142, a memory 143 and a I/O interface 141. The processor is configured to execute a control software stored on the memory 143 to execute any of the functions of the control unit 20 as above described. When executing the control software, the processor 142 may receive as input information from one or more sensors and/or units of the industrial truck by means of the I/O interface 141; the processor 142 may further output control signals to the display 40 and/or to one or more actuators of the industrial truck using the I/O interface 141 as well. Also other possible implementations of the control unit can be conceived, e.g. including a plurality of distributed processors or the like.

Therefore, as seen above, the data on energy consumption that are acquired by the control means include a curve of the instantaneous power that is supplied by the energy storage system during a work cycle. The control means 20 are configured to generate a report based on the power curve, thus obtaining an aggregate piece of data associated with energy consumption. Furthermore, the industrial truck further comprises a display 40, wherein the control means 40 are configured to control the display so as to display the generated report. This allows an aggregate representation of the acquired consumption data to be output to the user. These reports enable improved and more efficient management of the industrial truck by the user.

## Claims

1. Industrial truck (10) including:
- control means (20),
- an electrical energy storage system (71),
- operating means (70, 72) powered by the electrical energy storage system,
**characterized in that** the control means (20) are configured to acquire data related to consumption of energy by the operating means (70, 72) in one work cycle and to generate, based on the acquired data related to energy consumption, a report (50-52) related to energy consumption in a work cycle.

2. An industrial truck according to claim 1, wherein the work cycle is associated with a time range between a switch-on timing (Ti) of the industrial truck and a timing of a subsequent switch-off (Te) of the industrial truck.

3. An industrial truck according to claim 2, wherein the control means (20) are configured to acquire the data related to consumption of energy by the operating means in a work cycle by discarding the time periods (I1, I2) in which the operating means have energy consumption that is substantially equal to zero.

4. An industrial truck according to claims 1 or 2, wherein the data related to energy consumption that is acquired by the control means (20) includes the instantaneous power consumed by the operating means (70, 72) at the points in time of a work cycle in which the consumption of energy by the operating means (70, 72) is not null.

5. An industrial truck according to claim 4, wherein the control means (20) are configured to calculate an average power (Pm) with respect to the points in time in a work cycle in which the consumption of energy by the operating means is not null, wherein said report (50-52) generated by the control means (20) refers to the calculated average power.

6. An industrial truck according to one or more of the preceding claims, wherein the control means (20) are configured to calculate, based on the acquired data related to energy consumption, a percentage of time in which the operating means had power consumption within a first power range (30) and a percentage of time in which the operating means had power consumption within a second power range (31), preferably also a percentage of time in which the operating means had power consumption within a third power range (32), wherein the first, the second and the third, if present, power ranges are adjacent and not overlapping, wherein the report (50) related to energy consumption in one work cycle refers to the calculated percentages.

7. An industrial truck according to one or more of the preceding claims, wherein the control means (20) are configured to calculate, based on the acquired data related to energy consumption, a time span (TL, TM, TH) in which the operating means had power consumption within a first power range (30) and a time span in which the operating means had power consumption within a second power range (31), preferably also a time span in which the operating means had power consumption within a third power range (32), wherein the first, the second and the third, if present, power ranges are adjacent and not overlapping, wherein the report (51) related to energy consumption in one work cycle refers to the calculated time spans.

8. An industrial truck according to one or more of the preceding claims, wherein the report related to energy consumption in a work cycle includes the percentage of time in which the operating means had energy consumption that is null with respect to the time period of a work cycle, or the percentage of time wherein the operating means had energy consumption that is not null with respect to the time period of a work cycle.

9. An industrial truck according to one or more of the preceding claims, wherein the control means (20) are configured to generate a plurality (52) of reports (52a), each of which being related to one of a plurality of work cycles carried out in a day.

10. An industrial truck according to one or more of the preceding claims, wherein the report that is generated by the control means refers to the total energy consumed in a work cycle.

11. An industrial truck according to claim 10, wherein the energy consumed in a work cycle is classified using two or more classification categories each of which is associated with an energy range per work cycle, wherein the range limits depend on a set-up profile of the industrial truck associated with the performance, wherein the generated report refers to the classification of the consumed energy in a work cycle.

12. An industrial truck according to one or more of the preceding claims, wherein the energy consumption data that are acquired by the control means include a curve of the instantaneous power that is supplied by the energy storage system during a work cycle.

13. An industrial truck according to one or more of the preceding claims, including also a display (40), wherein the control means (20) are configured to control the display so as to display the generated report (50-52).

14. An industrial truck according to one or more of the preceding claims, wherein the operating means (70, 72) include at least traction means (72) of the industrial truck and material handling means (70).
